# EUROPEAN PATENT APPLICATION

(11) **EP 4 672 806 A1**
(43) Date of publication of application: **31.12.2025**
(21) Application number: 23924163.1
(22) Date of filing: 25.10.2023
(51) Int. Cl.: H04W 24/10, H04W 88/02, H04W 28/18

(54) **BASE STATION, TERMINAL, AND COMMUNICATION METHOD**

(30) Priority: 22.02.2023 JP 2023026228
(71) Applicant: Panasonic Intellectual Property Corporation of America, Torrance, CA 90504 (US)
(72) Inventor: YAMAMOTO, Tetsuya, Kadoma-shi, Osaka 571-0057 (JP); SUZUKI, Hidetoshi, Kadoma-shi, Osaka 571-0057 (JP); KUANG, Quan, 63225 Langen (DE)
(74) Representative: Grünecker Patent- und Rechtsanwälte PartG mbB
(86) International application number: PCT/JP2023/038559
(87) International publication number: WO 2024/176519

(57) **Abstract**

This base station comprises: a control circuit that determines, on the basis of the presence/absence of a request from a terminal, whether to notify a terminal about an artificial-intelligence-model-related configuration on the terminal side for a wireless interface; and a transmission circuit that transmits a signal relating to the configuration in cases where it has been determined that the terminal is to be notified about the configuration.

## Description

### Technical Field

The present disclosure relates to a base station, a terminal, and a communication method.

### Background Art

In recent years, a dramatic growth of Internet of Things (IoT) has been expected with the expansion and diversification of radio services as a background. The usage of mobile communication is expanding to all fields such as automobiles, houses, home electric appliances, or industrial equipment in addition to information terminals such as smartphones. In order to support the diversification of services, a substantial improvement in the performance and function of mobile communication systems has been required for various requirements such as an increase in the number of connected devices or low latency in addition to an increase in system capacity. The 5th generation mobile communication systems (5G) have features such as enhanced mobile broadband (eMBB), massive machine type communication (mMTC), and ultra reliable and low latency communication (URLLC), and flexibly provide radio communication in response to a wide variety of needs.

The 3rd Generation Partnership Project (3GPP) as an international standardizing body has been specifying New Radio (NR) as one of 5G radio interfaces.

### Citation List

### Non-Patent Literature (hereinafter referred to as "NPL")

NPL 1
   RP-213599, "New SI: Study on Artificial Intelligence (AI) / Machine Learning (ML) for NR Air Interface," Qualcomm (Moderator), December 2021.
NPL 2
   R1-2212966, "Summary#6 for CSI evaluation of [111-R18-AI/ML]", Moderator (Huawei), November 2022.
NPL 3
   3GPP TSG RAN WG1 #110bis-e, "RAN1 Chair's Notes"

### Summary of Invention

However, there is room for consideration on a method for improving the efficiency of radio communication.

One non-limiting and exemplary embodiment facilitates providing a base station, a terminal, and a communication method each capable of improving the efficiency of radio communication.

A base station according to one exemplary embodiment of the present disclosure includes: control circuitry, which, in operation, determines whether to indicate a configuration on an artificial intelligence model on a side of a terminal to the terminal based on presence or absence of a request from the terminal; and transmission circuitry, which, in operation, transmits a signal related to the configuration in a case where it has been determined that the configuration is indicated.

It should be noted that general or specific embodiments may be implemented as a system, an apparatus, a method, an integrated circuit, a computer program, a storage medium, or any selective combination thereof.

According to one exemplary embodiment of the present disclosure, it is possible to improve the efficiency of radio communication.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

FIG. 1 is a diagram illustrating an example of Channel State Information (CSI) compression utilizing a Machine Learning (ML)/ Artificial Intelligence (AI) technology;
FIG. 2 is a diagram illustrating an example of training method 1 for CSI compression;
FIG. 3 is a diagram illustrating an example of training method 2 for CSI compression;
FIG. 4 is a diagram illustrating an example of training method 3 for CSI compression;
FIG. 5 is a block diagram illustrating an exemplary configuration of a part of a base station;
FIG. 6 is a block diagram illustrating an exemplary configuration of a part of a terminal;
FIG. 7 is a diagram illustrating examples of mapping between cell IDs and AI/ML model IDs;
FIG. 8 is a diagram illustrating exemplary operations of the terminal and the base station;
FIG. 9 is a diagram illustrating examples of mapping between cell IDs, AI/ML models ID, and the version IDs of the AI/ML models;
FIG. 10 is a diagram illustrating exemplary operations of the terminal and the base station;
FIG. 11 is a diagram illustrating exemplary operations of the terminal and the base station;
FIG. 12 is a diagram illustrating exemplary operations of the terminal and the base station;
FIG. 13 is a diagram illustrating an example of an architecture;
FIG. 14 is a block diagram illustrating an example of a configuration of the base station;
FIG. 15 is a block diagram illustrating an example of a configuration of the terminal;
FIG. 16 illustrates an exemplary architecture for a 3GPP NR system;
FIG. 17 is a schematic diagram illustrating a functional split between NG-RAN and 5GC;
FIG. 18 is a sequence diagram of Radio Resource Control (RRC) connection setup/reconfiguration procedures;
FIG. 19 is a schematic diagram illustrating usage scenarios of enhanced Mobile Broadband (eMBB), massive Machine Type Communications (mMTC), and Ultra Reliable and Low Latency Communications (URLLC); and
FIG. 20 is a block diagram illustrating an exemplary 5G system architecture for a non-roaming scenario.

### Description of Embodiments

Hereinafter, embodiments of the present disclosure will be described in detail with reference to the accompanying drawings.

In NR, for example, an access scheme based on Orthogonal Frequency Division Multiplexing (OFDM) is employed for downlink transmission. Further, Multiple-Input Multiple-Output (MIMO) is employed in order to increase a data rate. In order to effectively extract the performance of MIMO, a closed-loop control is introduced, and Channel State Information (CSI) feedback is performed from a terminal (for example, also referred to as the user equipment (UE)) to a base station (for example, also referred to as gNB). In the feedback of CSI, it is required to realize high performance with a smaller amount of control information.

In 3GPP Release 18 (for example, also referred to as Rel. 18), it has been discussed to utilize an Artificial Intelligence (AI) technology such as Machine Learning (ML) (hereinafter, also referred to as "AI/ML") for a radio interface of NR (for example, see NPL 1). As a use case where the AI/ML technology is utilized, for example, CSI feedback, beam control, and location estimation have been studied.

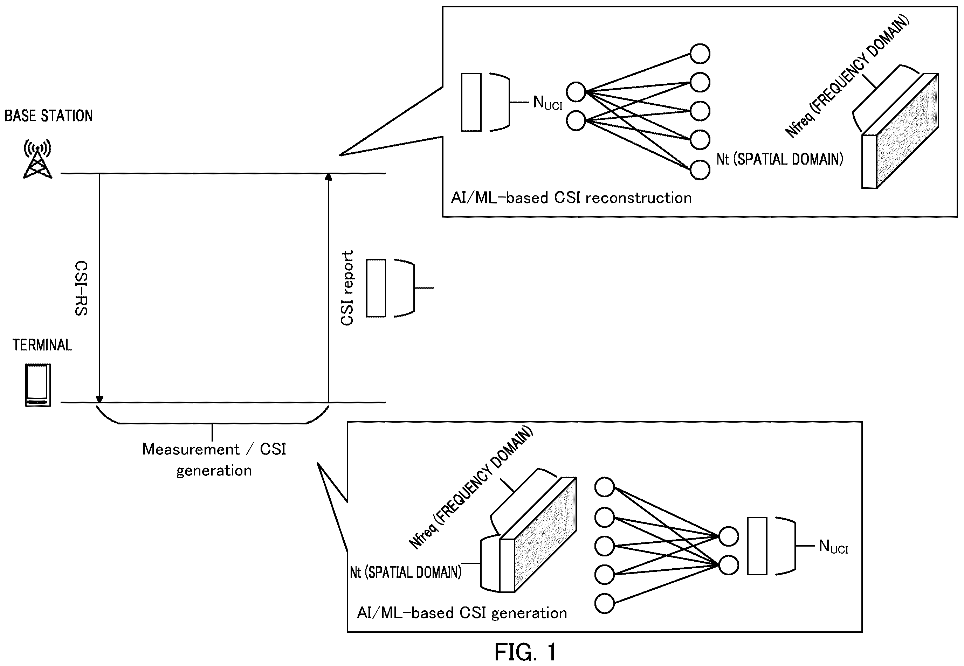

For example, for the CSI feedback, a method for compressing the information amount of CSI in a spatial domain and a frequency domain by utilizing the AI/ML technology (hereinafter, also referred to as CSI compression) has been studied. For example, in the machine learning, an AI/ML model (for example, an artificial intelligence model) such as a neural network is trained with a huge amount of training data, thereby making it possible to extract features thereof automatically. In the CSI compression, for example, an algorithm, termed as an autoencoder, mainly for dimension compression and reconstruction of image data is available. For example, as illustrated in FIG. 1, a CSI matrix represented by a two-dimensional region of a spatial domain and a frequency domain is regarded as an image, an encoder that is utilized for the compression of the autoencoder is utilized for CSI compression processing at the terminal side, and a decoder that performs the reconstruction is utilized for CSI reconstruction processing at the base station or network (for example, also referred to as the base station/network) side.

In the CSI compression, three methods described below have been studied as methods for training an encoder (or a CSI generation part) on the terminal side and a decoder (or a CSI reconstruction part) on the base station/network side (for example, see NPL 2).

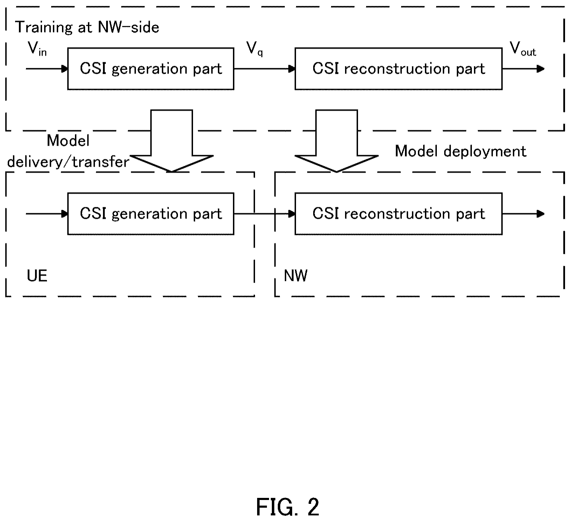

A first training method for the CSI compression (hereinafter, referred to as "training method 1") is, for example, as illustrated in FIG. 2, joint training of a two-sided model at a single side/entity on the terminal side or the network side. In training method 1, for example, as illustrated in FIG. 2, both AI/ML models (or, an AI/ML model will also be referred to simply as "model") of the CSI generation part and the CSI reconstruction part are jointly trained at the network side. The model of the CSI generation part trained at the network side is delivered/transferred to the terminal.

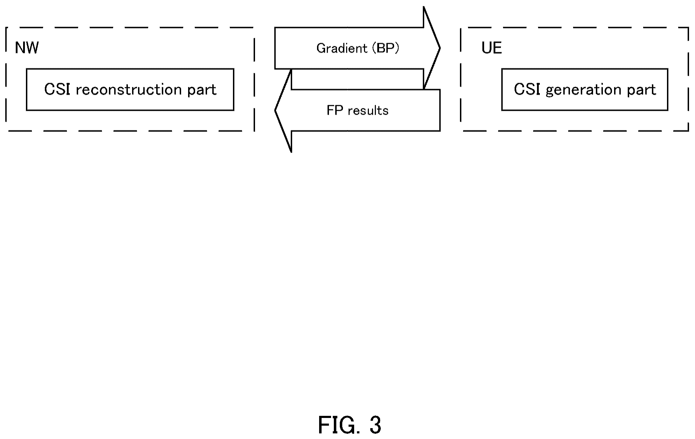

A second training method for the CSI compression (hereinafter, referred to as "training method 2") is, for example, as illustrated in FIG. 3, joint training of a two-sided model at each of the network side and the terminal side. In training method 2, for example, as illustrated in FIG. 3, information, such as Forward Propagation (FP) and Backward Propagation (BP) (for example, gradient), is exchanged between the terminal and the base station, and thus, both the terminal side and the network side jointly train the respective models of the CSI generation part and the CSI reconstruction part.

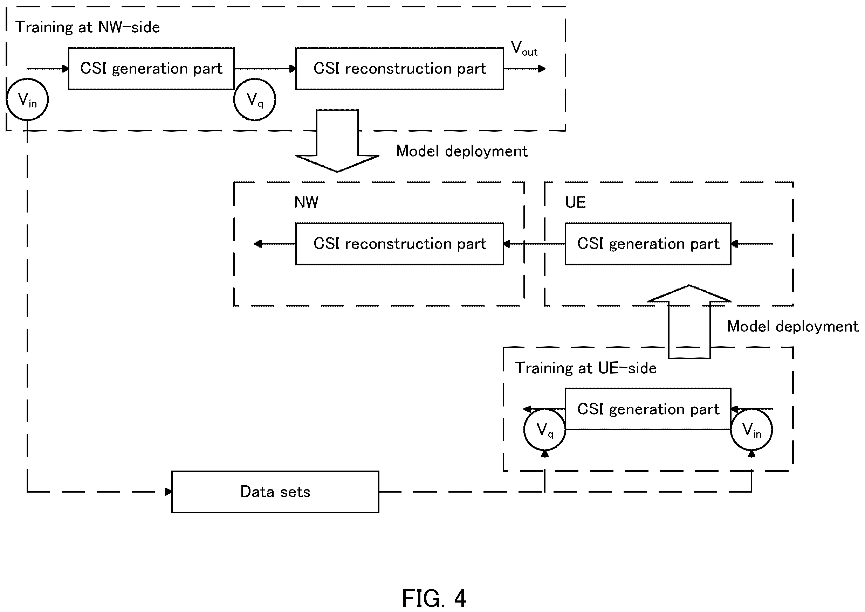

A third training method for the CSI compression (hereinafter, referred to as "training method 3") is, for example, as illustrated in FIG. 4, a method for individually training, at the terminal side and the network side, the model of the CSI generation part on the terminal side and the model of the CSI reconstruction part on the network side, respectively. In training method 3, for example, as illustrated in FIG. 4, both the models of the CSI generation part and the CSI reconstruction part are jointly trained at the network side. After the training at the network side is completed, the network side shares data sets used for the training (for example, input data (for example, Vᵢₙ) and output data (for example, V_{q}) used for training, and the like) with the terminal. The terminal side trains the model of the CSI generation part on the terminal side by using the data sets shared by the network side.

Examples of training methods for the CSI compression have been described above.

Here, features of a radio interface or a radio propagation path may vary depending on a scenario, a configuration, or a site. In a case where AI/ML is utilized for a radio interface, a method for applying a unified model for training an AI/ML model that assumes every environment can be mentioned. However, in a case where a unified model is applied, there is a possibility that an enormous amount of time and data will be spent on the training, and/or the scale of the model will be so increased that the amount of calculation processing or latency required for the inference processing using the model will be increased. To address the above, it has been studied to use, for a unified model, a model specific to a particular environment, such as a model specific to a scenario/configuration or a site (for example, see NPL 3).

As one case of deploying a model specific to a scenario/configuration or a site, there may be a case where a cell-specific model is deployed for each cell. For example, in a use case where an AI/ML model is deployed on the terminal side, such as the CSI compression described above, it is assumed that when the terminal moves from one cell to another cell, the AI/ML model on the terminal side is updated or switched in line with a model that is deployed in the new cell. Further, in addition to the movement between cells, an AI/ML model on the terminal side may also be updated or switched so as to be suitable for the new environment due to the movement between transmission and reception points (TRPs), beam switching, or the movement of the terminal location in a cell.

For example, in training method 1 described above, the model trained at the network side can be delivered/transferred to the terminal side to the accompaniment of a cell movement. In addition, for example, in training method 2, in a case where at least online learning or online training is required, information such as FP, BP, and gradient can be exchanged between the network side and the terminal side to the accompaniment of a cell movement. In addition, for example, in training method 3, in a case where at least online learning or online training is required, information such as data sets can be shared between the network side and the terminal side to the accompaniment of a cell movement.

When implementing the deployment of an AI/ML model specific to a scenario/configuration or a site, for example, it is expected to consider an overhead and a latency for updating the AI/ML model on the terminal side. For example, in a case where a control method according to updating or switching of an AI/ML model on the terminal side to the accompaniment of a terminal movement (Mobility) is not appropriately defined, the delivery/transfer/sharing of an AI/ML model or information that is used for training and updating an AI/ML model may be performed each time a Mobility occurs, the AI/ML technology cannot be efficiently utilized for a radio interface, and the improvement in communication efficiency or communication quality may not be possibly expected.

In one non-limiting and exemplary embodiment of the present disclosure, a method for appropriately and efficiently updating an AI/ML model on the terminal side in a system in which an AI/ML model specific to a scenario/configuration or a site is deployed will be described.

According to one non-limiting and exemplary embodiment of the present disclosure, it is possible to, for example, in a system in which an AI/ML model specific to a scenario/configuration or a site is deployed, efficiently utilize the AI/ML technology for a radio interface, and improve communication efficiency and communication quality in a radio system.

Hereinafter, non-limiting embodiments of the present disclosure will be described.

### (Embodiment 1)

### [Overview of Communication System]

A communication system according to the present embodiment includes, for example, at least one base station and at least one terminal.

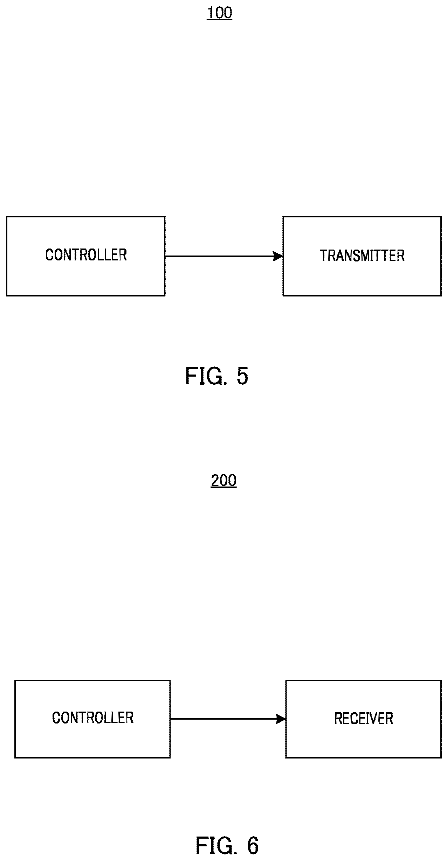

FIG. 5 is a block diagram illustrating an exemplary configuration of a part of base station 100 according to one exemplary embodiment of the present disclosure, and FIG. 6 is a block diagram illustrating an exemplary configuration of a part of terminal 200 according to one exemplary embodiment of the present disclosure.

In base station 100 illustrated in FIG. 5, the controller (for example, corresponding to control circuitry) determines whether to indicate (for example, deliver/transfer or share) a configuration on an AI/ML model on the terminal side, where the AI/ML model on the terminal side is an AI/ML model for a radio interface, to terminal 200 based on the presence or absence of a request from terminal 200. The transmitter (for example, transmission circuitry) transmits a signal related to the configuration on the AI/ML model on the terminal side in a case where it has been determined that the configuration is indicated.

In terminal 200 illustrated in FIG. 6, the controller (for example, corresponding to control circuitry) determines whether to request a network to indicate a configuration on an AI/ML model on the terminal side based on information (for example, mapping information to be described later) on an AI/ML model held by terminal 200, where the information on the AI/ML model held by terminal 200 is an AI/ML model for a radio interface. The receiver (for example, corresponding to reception circuitry) receives a signal related to the configuration on the AI/ML model on the terminal side in a case where it has been requested that the configuration be indicated.

In the present embodiment, as an example, a use case is assumed in which an AI/ML model is deployed on the terminal side, such as the CSI compression described above.

At this time, terminal 200 may hold a plurality of AI/ML models. In a case where, in a Mobility, terminal 200 holds an AI/ML model that is deployed in a cell (for example, a target cell) to which terminal 200 moves, at a TRP to which terminal 200 moves, with a beam to which switching is performed, and at a location to which terminal 200 moves, the network (for example, base station 100) may not deliver/transfer or share a new AI/ML model (or information that is used for training and updating a new AI/ML model) to or with terminal 200 for model updating or switching.

When terminal 200 can update and switch an AI/ML model on the terminal side with no delivery/transfer and sharing of a new AI/ML model for AI/ML model updating or switching (or information that is used for training and updating a new AI/ML model) to and with terminal 200, an overhead during a Mobility is reduced, and there is room for the possibility of reducing a latency in model updating and switching.

In the present embodiment, with respect to an AI/ML model on the terminal side, whether to deliver/transfer or share a new AI/ML model (or information that is used for training and updating an AI/ML model) to or with terminal 200 for model updating or switching is determined based on a request from terminal 200.

Thus, it is possible to suppress unnecessary delivery/transfer or sharing of a new AI/ML model (or information that is used for training and updating a new AI/ML model) to or with terminal 200 at the time of model updating or switching.

In the present embodiment, in order for terminal 200 to appropriately judge whether to request a new AI/ML model (or information that is used for training and updating a new AI/ML model) to be delivered/transferred or shared to or with terminal 200 for model updating or switching at terminal 200, information on mapping (hereinafter, also referred to as "mapping information") between information (for example, an ID) on a radio environment, such as a cell, a site, a TRP, a beam, and a location, and information (for example, a model ID or a functionality ID) on an AI/ML model that is deployed correspondingly to each of the cell, the site, the TRP, the beam, and the location may be indicated to terminal 200.

As a method for indicating mapping information, for example, the mapping information may be broadcast by using cell-specific higher layer signaling (for example, a Radio Resource Control (RRC) signal) or the like, or may be indicated to terminal 200 by using an individual RRC signal or the like.

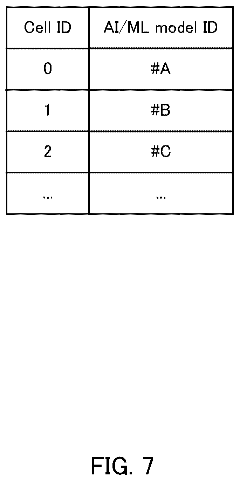

FIG. 7 illustrates examples of mapping information on mapping between cell IDs and AI/ML model IDs to be indicated to terminal 200. As illustrated in FIG. 7, terminal 200 may hold mapping information on a plurality of AI/ML models (model IDs: #A, #B, #C, ...) corresponding to a plurality of cells (cell IDs: 0, 1, 2, ...), respectively.

Note that, FIG. 7 illustrates examples of mapping between cells and AI/ML models, but the present disclosure is not limited thereto. For example, the mapping between a TRP and an AI/ML model may be mapping between a Transmission Configuration Indicator (TCI) and information on the AI/ML model (for example, a model ID or a functionality ID). In addition, for example, the mapping between a beam and an AI/ML model may be mapping between a Synchronization Signal Block (SSB) index or a Channel State Information-Reference Signal (CSI-RS) index and information on the AI/ML model (for example, a model ID or a functionality ID). In addition, for example, the mapping between a location and an AI/ML model may be mapping between a zone ID and information on the AI/ML model (for example, a model ID or a functionality ID).

For example, in a case where terminal 200 acquires the above mapping information during a Mobility and then does not hold an AI/ML model (for example, also referred to as "target AI/ML model") that is deployed in a cell (for example, a target cell) to which terminal 200 moves, at a TRP to which terminal 200 moves, with a beam to which switching is performed, or at a location to which terminal 200 moves, terminal 200 requests the network (for example, base station 100) to deliver/transfer or share a target AI/ML model (or information that is used for training or updating a target AI/ML model) to or with terminal 200 for updating or switching an AI/ML model on the terminal side.

A request from terminal 200 to the network or a message indicative of whether to deliver/transfer or share a target AI/ML model (or information that is used for training or updating a target AI/ML model) to or with terminal 200 may be transmitted from terminal 200 during a random access procedure during a Mobility.

For example, in the use case of the CSI compression described above, in a case where terminal 200 requests the network to deliver/transfer or share a target AI/ML model (or information that is used for training and updating a target AI/ML model) to or with terminal 200 for updating or switching an AI/ML model on the terminal side, the AI/ML model itself may be delivered/transferred or shared in training method 1, information on FP, BP, or gradient may be delivered/transferred or shared in training method 2, and data sets may be delivered/transferred or shared in training method 3. In addition, these pieces of information to be delivered/transferred or shared may be, for example, delivered/transferred or shared via an RRC reconfiguration message or a user plane message. In addition, the delivery/transfer or sharing of these pieces of information may be performed after the connection to a target cell, to which terminal 200 moves, or a target TRP, to which terminal 200 moves, after switching which is performed to a beam, and after a Mobility to a location to which terminal 200 moves.

Terminal 200 may make, for example, a target AI/ML model, which is delivered/transferred, available in a cell (target cell) to which terminal 200 moves, at a TRP to which terminal 200 moves, with a beam to which switching is performed, or at a location to which terminal 200 moves. Alternatively, terminal 200 may train, for example, based on information that is used for training and updating a target AI/ML model shared with terminal 200, the target AI/ML model, and may make the target AI/ML model available.

On the other hand, in a case where terminal 200 holds an AI/ML model (target AI/ML model) that is deployed, for example, in a cell (target cell) to which terminal 200 moves, at a TRP to which terminal 200 moves, with a beam to which switching is performed, or at a location to which terminal 200 moves, terminal 200 may not transmit the above-described request message to the network. Alternatively, in this case, terminal 200 may transmit, to the network, a request message including information for indicating that the delivery/transfer or sharing of a target AI/ML model (or information that is used for training and updating a target AI/ML model) is not necessary.

Terminal 200 may make a target AI/ML model, which is already held by terminal 200, available in a cell (target cell) to which terminal 200 moves, at a TRP to which terminal 200 moves, with a beam to which switching is performed, or at a location to which terminal 200 moves.

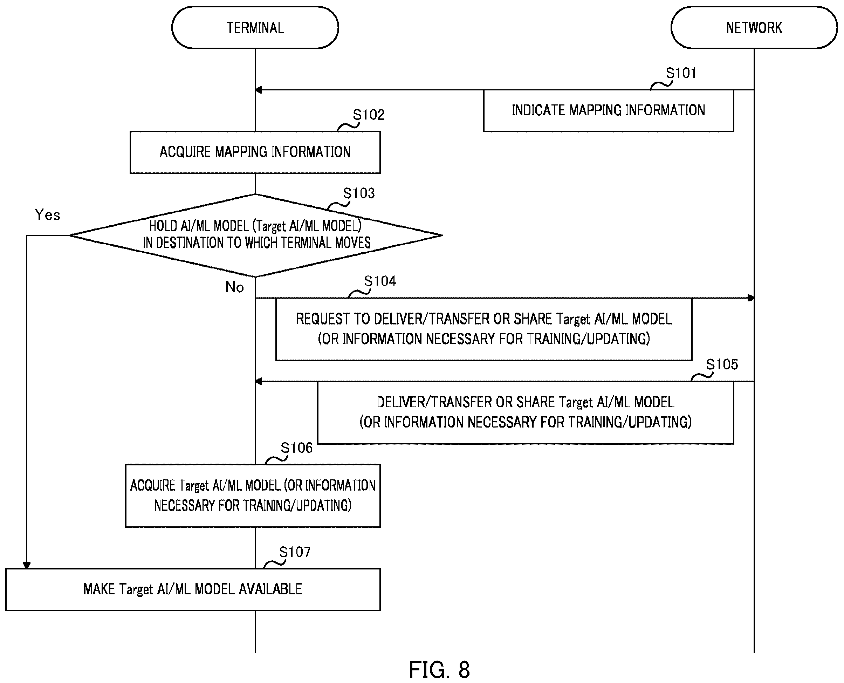

FIG. 8 illustrates exemplary operations of terminal 200 and the network (for example, base station 100) according to the present embodiment. In FIG. 8, as an example, exemplary operations related to an AI/ML model that is deployed for each cell will be described, but the present disclosure is not limited thereto, and an AI/ML model may correspond to a TRP, a site, a beam, or a location.

In FIG. 8, the network indicates, to terminal 200, mapping information on mapping between cells and AI/ML models (for example, FIG. 7) (S101). Terminal 200 acquires (or receives) the mapping information indicated by the network (S102).

For example, terminal 200 determines, based on the mapping information, whether to hold an AI/ML model (target AI/ML model) that corresponds to a cell (target cell) to which terminal 200 moves (S103).

In a case where terminal 200 does not hold the target AI/ML model (S103: No), terminal 200 requests the network to deliver/transfer or share a target AI/ML model (or information that is used for training or updating a target AI/ML model) to or with terminal 200 (S104).

In a case where the network is requested by terminal 200 to deliver/transfer or share a target AI/ML model (or information that is used for training or updating a target AI/ML model) to or with terminal 200, the network delivers/transfers or shares a target AI/ML model (or information that is used for training or updating a target AI/ML model) to or with terminal 200 (S105).

Terminal 200 acquires the target AI/ML model (or the information used for training or updating the target AI/ML model) indicated by the network (S106). For example, terminal 200 may update, based on the target AI/ML model indicated by the network, the mapping information held by terminal 200.

In a case where terminal 200 holds the target AI/ML model (S103: Yes) or in a case where terminal 200 has acquired the target AI/ML model from the network (S106), terminal 200 makes the target AI/ML model available (S107).

As described above, terminal 200 determines whether to request the network to indicate (for example, deliver/transfer or share) a configuration on an AI/ML model (for example, a target AI/ML model) on the terminal side based on mapping information on an AI/ML model held by terminal 200, where the AI/ML model held by terminal 200 is an AI/ML model for a radio interface. In addition, the network (for example, base station 100) determines whether to indicate (for example, deliver/transfer or share) a configuration on an AI/ML model (for example, a target AI/ML model) on the terminal side, where the AI/ML model on the terminal side is an AI/ML model for a radio interface, to terminal 200 based on the presence or absence of a request from terminal 200. Base station 100 then transmits a signal related to the configuration on the target AI/ML model in a case where base station 100 determines to deliver/transfer or share the configuration to or with terminal 200, and terminal 200 receives the signal related to the configuration on the target AI/ML model.

Thus, for example, the network does not deliver/transfer or share information on a target AI/ML model in a case where there is no request from terminal 200 (or in a case where there is a message indicative of unnecessariness thereof). In this way, it is possible to suppress unnecessary delivery/transfer or sharing of a new AI/ML model (or information that is used for training and updating a new AI/ML model) to or with terminal 200 at the time of model updating or switching for terminal 200 after a Mobility. For this reason, it is possible to reduce an overhead and a latency for updating or switching an AI/ML model on the terminal side. Thus, according to the present embodiment, it is possible to improve the efficiency of radio communication.

### (Embodiment 2)

Base station 100 and terminal 200 according to the present embodiment may have the same configurations as those in Embodiment 1.

In the present embodiment, as an example, a use case is assumed in which an AI/ML model is deployed on the terminal side, such as the CSI compression described above.

At this time, terminal 200 may hold a plurality of AI/ML models. In a case where, in a Mobility, terminal 200 holds an AI/ML model that is deployed in a cell (for example, a target cell) to which terminal 200 moves, at a TRP to which terminal 200 moves, with a beam to which switching is performed, and at a location to which terminal 200 moves, the network (for example, base station 100) may not deliver/transfer or share a new AI/ML model (or information that is used for training and updating a new AI/ML model) to or with terminal 200 for model updating or switching.

When terminal 200 can update and switch an AI/ML model on the terminal side with no delivery/transfer and sharing of a new AI/ML model for AI/ML model updating or switching (or information that is used for training and updating a new AI/ML model) to and with terminal 200, an overhead during a Mobility is reduced, and there is room for the possibility of reducing a latency in model updating and switching.

In the present embodiment, as in Embodiment 1, with respect to an AI/ML model on the terminal side, whether to deliver/transfer or share a new AI/ML model (or information that is used for training and updating a new AI/ML model) to or with terminal 200 for model updating or switching is determined based on a request from terminal 200.

Thus, it is possible to suppress unnecessary delivery/transfer or sharing of a new AI/ML model (or information that is used for training and updating a new AI/ML model) to or with terminal 200 at the time of model updating or switching.

In the present embodiment, in order for terminal 200 to appropriately judge whether to request a new AI/ML model (or information that is used for training and updating a new AI/ML model) to be delivered/transferred or shared to or with terminal 200 for model updating or switching at terminal 200, mapping information on mapping between information (for example, an ID) on a radio environment, such as a cell, a site, a TRP, a beam, and a location, information (for example, a model ID or a functionality ID) on an AI/ML model that is deployed correspondingly to each of the cell, the site, the TRP, the beam, and the location, and information on the version of each AI/ML model (for example, a version ID or a time stamp at which the current model is updated) may be indicated to terminal 200.

As a method for indicating mapping information, for example, the mapping information may be broadcast by using cell-specific higher layer signaling (for example, an RRC signal) or the like, or may be indicated to terminal 200 by using an individual RRC signal or the like.

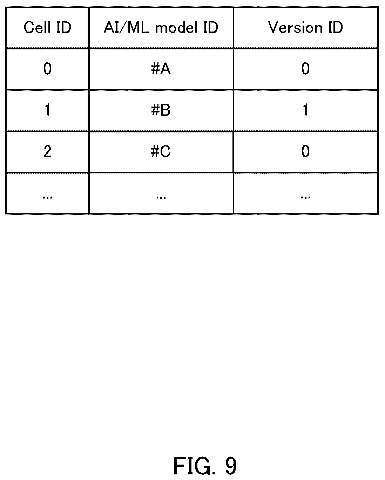

FIG. 9 illustrates examples of mapping information on mapping between cell IDs, AI/ML model IDs, and version IDs to be indicated to terminal 200. As illustrated in FIG. 9, terminal 200 may hold mapping information on a plurality of AI/ML models (model IDs: #A, #B, #C, ...) corresponding to a plurality of cells (cell IDs: 0, 1, 2, ...), respectively, and the versions (version IDs) of the respective AI/ML models.

Note that, FIG. 9 illustrates examples of mapping between cells, AI/ML models, and the versions of the AI/ML models, but the present disclosure is not limited thereto. For example, the mapping between a TRP and an AI/ML model may be mapping between a TCI, information on the AI/ML model (for example, a model ID or a functionality ID), and information on the version of the AI/ML model. In addition, for example, the mapping between a beam and an AI/ML model may be mapping between an SSB index or a CSI-RS index, information on the AI/ML model (for example, a model ID or a functionality ID), and information on the version of the AI/ML model. In addition, for example, the mapping between a location and an AI/ML model may be mapping between a zone ID, information on the AI/ML model (for example, a model ID or a functionality ID), and information on the version of the AI/ML model.

For example, in a case where terminal 200 acquires the above mapping information during a Mobility and then does not hold the current version of an AI/ML model (target AI/ML model) that is deployed in a cell (for example, a target cell) to which terminal 200 moves, at a TRP to which terminal 200 moves, with a beam to which switching is performed, or at a location to which terminal 200 moves, terminal 200 requests the network (for example, base station 100) to deliver/transfer or share a target AI/ML model (or information that is used for training or updating a target AI/ML model) to or with terminal 200 for updating or switching an AI/ML model on the terminal side.

A request from terminal 200 to the network or a message indicative of whether to deliver/transfer or share a target AI/ML model (or information that is used for training or updating a target AI/ML model) to or with terminal 200 may be transmitted from terminal 200 during a random access procedure during a Mobility.

For example, in the use case of the CSI compression described above, in a case where terminal 200 requests the network to deliver/transfer or share a target AI/ML model (or information that is used for training and updating a target AI/ML model) to or with terminal 200 for updating or switching an AI/ML model on the terminal side, the AI/ML model itself may be delivered/transferred or shared in training method 1, information on FP, BP, or gradient may be delivered/transferred or shared in training method 2, and data sets may be delivered/transferred or shared in training method 3. In addition, these pieces of information to be delivered/transferred or shared may be, for example, delivered/transferred or shared via an RRC reconfiguration message or a user plane message. In addition, the delivery/transfer or sharing of these pieces of information may be performed after the connection to a target cell, to which terminal 200 moves, or a target TRP, to which terminal 200 moves, after switching which is performed to a beam, and after a Mobility to a location to which terminal 200 moves.

Terminal 200 may make, for example, a target AI/ML model, which is delivered/transferred, available in a cell (target cell) to which terminal 200 moves, at a TRP to which terminal 200 moves, with a beam to which switching is performed, or at a location to which terminal 200 moves. Alternatively, terminal 200 may train, for example, based on information that is used for training and updating a target AI/ML model shared with terminal 200, the target AI/ML model, and may make the target AI/ML model available.

On the other hand, in a case where terminal 200 holds the current version of an AI/ML model (target AI/ML model) that is deployed, for example, in a cell (target cell) to which terminal 200 moves, at a TRP to which terminal 200 moves, with a beam to which switching is performed, or at a location to which terminal 200 moves, terminal 200 may not transmit the above-described request message to the network. Alternatively, in this case, terminal 200 may transmit, to the network, a request message including information for indicating that the delivery/transfer or sharing of a target AI/ML model (or information that is used for training and updating a target AI/ML model) is not necessary.

Terminal 200 may make a target AI/ML model, which is already held by terminal 200, available in a cell (target cell) to which terminal 200 moves, at a TRP to which terminal 200 moves, with a beam to which switching is performed, or at a location to which terminal 200 moves.

Note that, the operations of terminal 200 and the network (for example, base station 100) according to the present embodiment may be the same as the exemplary operations illustrated in FIG. 8. The present embodiment differs from Embodiment 1 in terms of using mapping information indicative of mapping between cells, AI/ML models, and the versions of the AI/ML models (for example, FIG. 9).

As described above, terminal 200 determines whether to request the network to indicate (for example, deliver/transfer or share) a configuration on an AI/ML model (for example, a target AI/ML model) on the terminal side based on mapping information on an AI/ML model held by terminal 200, where the AI/ML model held by terminal 200 is an AI/ML model for a radio interface. In addition, the network (for example, base station 100) determines whether to indicate (for example, deliver/transfer or share) a configuration on an AI/ML model (for example, a target AI/ML model) on the terminal side, where the AI/ML model on the terminal side is an AI/ML model for a radio interface, to terminal 200 based on the presence or absence of a request from terminal 200. Base station 100 then transmits a signal related to the configuration on the target AI/ML model in a case where base station 100 determines to deliver/transfer or share the configuration to or with terminal 200, and terminal 200 receives the signal related to the configuration on the target AI/ML model.

Thus, for example, the network does not deliver/transfer or share information on a target AI/ML model in a case where there is no request from terminal 200 (or in a case where there is a message indicative of unnecessariness thereof). In this way, it is possible to suppress unnecessary delivery/transfer or sharing of a new AI/ML model (or information that is used for training and updating a new AI/ML model) to or with terminal 200 at the time of model updating or switching for terminal 200 after a Mobility. For this reason, it is possible to reduce an overhead and a latency for updating or switching an AI/ML model on the terminal side. Thus, according to the present embodiment, it is possible to improve the efficiency of radio communication.

In addition, according to the present embodiment, it is possible to manage AI/ML models corresponding to certain cells, sites, TRPs, beams, and locations by using, in addition to AI/ML model IDs, the version IDs for the respective AI/ML models. For this reason, it is possible to suppress an increase in model IDs that are assigned to AI/ML models.

### (Variation 1 of Embodiments 1 and 2)

The timing with which terminal 200 requests the network side to deliver/transfer or share a target AI/ML model (or information that is used for training and updating a target AI/ML model) is not limited to during a Mobility.

For example, terminal 200 may request the network side to deliver/transfer or share a target AI/ML model (or information that is used for training and updating a target AI/ML model) before a Mobility. In this case, terminal 200 may request the network to deliver/transfer or share an AI/ML model corresponding to a cell (target cell) to which terminal 200 moves, a TRP to which terminal 200 moves, a beam to which switching is performed, or a location to which terminal 200 moves, where the cell (target cell), the TRP, the beam, or the location is estimated before a Mobility (or information that is used for training and updating an AI/ML model), to or with terminal 200.

In addition, for example, terminal 200 may request the network to deliver/transfer or share an AI/ML model corresponding to a cell (target cell) to which terminal 200 moves, a TRP to which terminal 200 moves, a beam to which switching is performed, and a location to which terminal 200 moves (or information that is used for training and updating an AI/ML model) to or with terminal 200 after a Mobility. For example, terminal 200 may make a request related to an AI/ML model as necessary, such as in a case where terminal 200 does not hold an AI/ML model that corresponds to a cell (target cell) to which terminal 200 moves, a TRP to which terminal 200 moves, a beam to which switching is performed, and a location to which terminal 200 moves, after a Mobility.

A request from terminal 200 to the network or a message indicative of whether it is necessary to deliver/transfer or share an AI/ML model (or information that is used for training and updating an AI/ML model) to or with terminal 200 may be transmitted using, for example, a control plane message such as Uplink Control Information (UCI) or a Medium Access Control-Control Element (MAC-CE), or may be transmitted using a user plane message.

For example, in the use case of the CSI compression described above, in a case where terminal 200 requests the network to deliver/transfer or share a target AI/ML model (or information that is used for training and updating a target AI/ML model) to or with terminal 200 for updating or switching an AI/ML model on the terminal side, the AI/ML model itself may be delivered/transferred or shared in training method 1, information on FP, BP, or gradient may be delivered/transferred or shared in training method 2, and data sets may be delivered/transferred or shared in training method 3. In addition, these pieces of information to be delivered/transferred or shared may be, for example, delivered/transferred or shared via a user plane message or may be delivered/transferred or shared via an RRC signal.

In addition, in a case where the delivery/transfer or sharing is performed via a user plane message, the delivery/transfer or sharing of these pieces of information may be performed before a Mobility, in the middle of a Mobility, or after a Mobility.

For example, in a case where the delivery/transfer or sharing is performed in the middle of a Mobility, part of the information may be delivered/transferred or shared from a cell (source cell) from which terminal 200 moves, a TRP from which terminal 200 moves, a beam before switching, or a location before terminal 200 moves, and the remaining part of the information may be delivered/transferred or shared after the connection to a cell (target cell), to which terminal 200 moves, or a TRP, to which terminal 200 moves, after switching to a beam to which switching is performed, or from a location to which terminal 200 moves. Thus, it is possible to realize seamless delivery/transfer or sharing of an AI/ML model (or information that is used for training and updating an AI/ML model).

### (Variation 2 of Embodiments 1 and 2)

In Embodiments 1 and 2, a function of processing AI/ML (for example, an Access and Mobility management Function (AMF) or a network node specific to AI/ML) may not be base station 100 (for example, gNB).

As an example of a case where the function of processing AI/ML (for example, the AI/ML function) is not base station 100 (for example, gNB), it can be assumed that the function of processing AI/ML is deployed within a core network or outside a 3GPP network via a server. In this case, the function of processing AI/ML may not recognize information (for example, an ID) corresponding to a cell, a site, a TRP, a beam, or a location of the serving cell. In a case where such a network architecture is assumed, the following options may be applied.

### <Option 1>

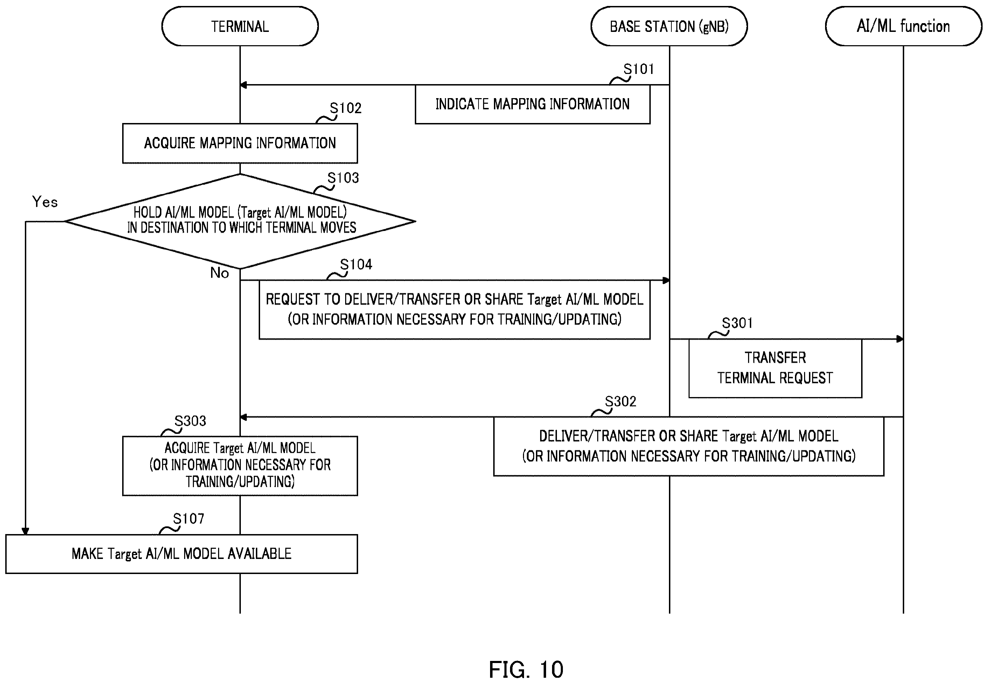

FIG. 10 illustrates exemplary operations of terminal 200, base station 100 (for example, gNB), and the function of processing AI/ML (AI/ML function) in Option 1. In FIG. 10, the same operations as those in Embodiments 1 and 2 are denoted by the same reference signs.

In Option 1, terminal 200 requests base station 100 (gNB) to deliver/transfer or share (or not to deliver/transfer or share) a new AI/ML model (or information that is used for training and updating an AI/ML model) to or with terminal 200 for model updating or switching (S104). A signal (for example, request information) including this request may be transmitted by being included in a control plane message (for example, UCI or MAC-CE). In addition, the signal including this request may include, for example, information on the AI/ML model (for example, a model ID, a functionality ID) requested by terminal 200.

Base station 100 (for example, gNB) transfers the request information from terminal 200 to the function of processing AI/ML (S301).

In a case where there is a request for the delivery/transfer or sharing of information on a target AI/ML model from terminal 200, the function of processing AI/ML delivers/transfer or shares a target AI/ML model (or information that is used for training and updating a target AI/ML model) to or with terminal 200 (S302). Terminal 200 acquires the target AI/ML model (or the information that is used for training and updating the target AI/ML model) from the function of processing AI/ML (S303).

As described above, base station 100 (gNB) that is the serving cell for terminal 200 can recognize a new AI/ML model, which becomes usable at terminal 200, by transmission of request information from terminal 200 to the function of processing AI/ML via base station 100.

### <Option 2>

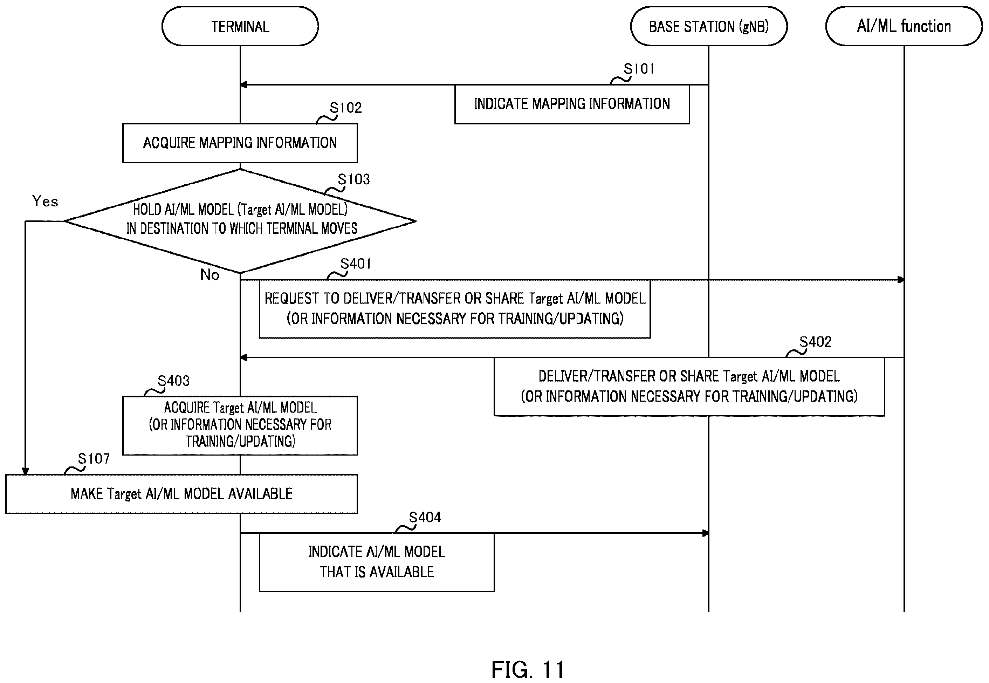

FIG. 11 illustrates exemplary operations of terminal 200, base station 100 (for example, gNB), and the function of processing AI/ML (AI/ML function) in Option 2. In FIG. 11, the same operations as those in Embodiments 1 and 2 are denoted by the same reference signs.

In Option 2, terminal 200 requests the function of processing AI/ML to deliver/transfer or share (or not to deliver/transfer or share) a new AI/ML model (or information that is used for training and updating an AI/ML model) to or with terminal 200 for model updating or switching (S401). A signal (for example, request information) including this request may be transmitted by being included in a user plane message.

In a case where there is a request for the delivery/transfer or sharing of information on a target AI/ML model from terminal 200, the function of processing AI/ML delivers/transfer or shares a target AI/ML model (or information that is used for training and updating a target AI/ML model) to or with terminal 200 (S402). Terminal 200 acquires the target AI/ML model (or the information that is used for training and updating the target AI/ML model) from the function of processing AI/ML (S403).

Terminal 200 indicates, to the network (for example, base station 100 (gNB)), information on a new AI/ML model that is available (S404). A signal including this indication may be transmitted by a control plane message (for example, UCI or MAC-CE), or may be transmitted by a user plane message.

As described above, even in a case where request information is transmitted from terminal 200 to the function of processing AI/ML without going through base station 100, base station 100 (gNB) that is the serving cell for terminal 200 can recognize a new AI/ML model, which becomes usable at terminal 200, by terminal 200 indicating, to base station 100, information on a new AI/ML model that is available.

Note that, in Option 2, a case has been described in which terminal 200 indicates, to the network (for example, base station 100 (gNB)), information on a new AI/ML model that is available by terminal 200, but the present disclosure is not limited thereto, and, for example, information on a new AI/ML model that is available by terminal 200 may be indicated from the function of processing AI/ML to the network (for example, base station 100 (gNB)).

### (Embodiment 3)

Base station 100 and terminal 200 according to the present embodiment may have the same configurations as those in Embodiment 1 or 2.

For example, at base station 100, a controller (for example, corresponding to control circuitry) determines whether to indicate (for example, deliver/transfer or share) a configuration on an AI/ML model on the terminal side to terminal 200 based on information on an AI/ML model held by the terminal 200. A transmitter (for example, transmission circuitry) transmits a signal related to the configuration on the AI/ML model on the terminal side in a case where it has been determined that the configuration is indicated.

In addition, for example, at terminal 200, a transmitter (for example, corresponding to transmission circuitry) transmits information on an AI/ML model held by terminal 200, and a receiver (for example, reception circuitry) receives a configuration on an AI/ML model, which is indicated based on the information.

In the present embodiment, as an example, a use case is assumed in which an AI/ML model is deployed on the terminal side, such as the CSI compression described above.

At this time, terminal 200 may hold a plurality of AI/ML models. In a case where, in a Mobility, terminal 200 holds an AI/ML model that is deployed in a cell (for example, a target cell) to which terminal 200 moves, at a TRP to which terminal 200 moves, with a beam to which switching is performed, and at a location to which terminal 200 moves, the network (for example, base station 100) may not deliver/transfer or share a new AI/ML model (or information that is used for training and updating a new AI/ML model) to or with terminal 200 for model updating or switching.

When terminal 200 can update and switch an AI/ML model on the terminal side with no delivery/transfer and sharing of a new AI/ML model for AI/ML model updating or switching (or information that is used for training and updating an AI/ML model) to and with terminal 200, an overhead during a Mobility is reduced, and there is room for the possibility of reducing a latency in model updating and switching.

In the present embodiment, with respect to an AI/ML model on the terminal side, whether to deliver/transfer or share a new AI/ML model (or information that is used for training and updating a new AI/ML model) to or with terminal 200 for model updating or switching is determined based on an instruction of the network.

Thus, it is possible to suppress unnecessary delivery/transfer or sharing of a new AI/ML model (or information that is used for training and updating a new AI/ML model) to or with terminal 200 at the time of model updating or switching.

In the present embodiment, terminal 200 reports an AI/ML model held by terminal 200 to the network (for example, base station 100) by using, for example, a terminal capability report.

Note that, a report on an AI/ML model held by terminal 200 may be included in an existing terminal capability report (UE Capability signaling), or may be included in a function report that is newly introduced, such as an AI/ML function report. In addition, in a case where the capability of terminal 200 is common among a plurality of terminals (for example, in a case where a model that can be held by all terminals 200 is common), this reporting procedure may be dispensed with.

The network (for example, base station 100) determines, with respect to an AI/ML model on the terminal side, whether to deliver/transfer or share a new AI/ML model (or information that is used for training and updating a new AI/ML model) to or with terminal 200 for model updating or switching based on the capability of terminal 200 to be reported (for example, an AI/ML model held by terminal 200). For example, this event may occur during a Mobility of terminal 200.

For example, an instruction on whether to deliver/transfer or share a new AI/ML model (or information that is used for training and updating a new AI/ML model) to or with terminal 200 for model updating or switching may be indicated together with an RRC signal such as a handover indication.

Note that, the network according to the present embodiment may be a base station (gNB), an Access and Mobility management Function (AMF), or a network node specific to AI/ML.

For example, in the use case of the CSI compression described above, in a case where the network determines to deliver/transfer or share an AI/ML model (or information that is used for training or updating an AI/ML model) to or with terminal 200 for updating or switching an AI/ML model on the terminal side, the AI/ML model itself may be delivered/transferred or shared in training method 1, information on FP, BP, or gradient may be delivered/transferred or shared in training method 2, and data sets may be delivered/transferred or shared in training method 3. In addition, these pieces of information to be delivered/transferred or shared may be, for example, delivered/transferred or shared via an RRC reconfiguration message or a user plane message.

In addition, the delivery/transfer or sharing of these pieces of information may be performed before a Mobility, in the middle of a Mobility, or after a Mobility. For example, in a case where the delivery/transfer or sharing is performed in the middle of a Mobility, part of the information may be delivered/transferred or shared from a cell (source cell) from which terminal 200 moves, a TRP from which terminal 200 moves, a beam before switching, or a location before terminal 200 moves, and the remaining part of the information may be delivered/transferred or shared after the connection to a cell (target cell), to which terminal 200 moves, or a TRP, to which terminal 200 moves, after switching to a beam to which switching is performed, or from a location to which terminal 200 moves. Thus, it is possible to realize seamless delivery/transfer or sharing of an AI/ML model (or information that is used for training and updating an AI/ML model).

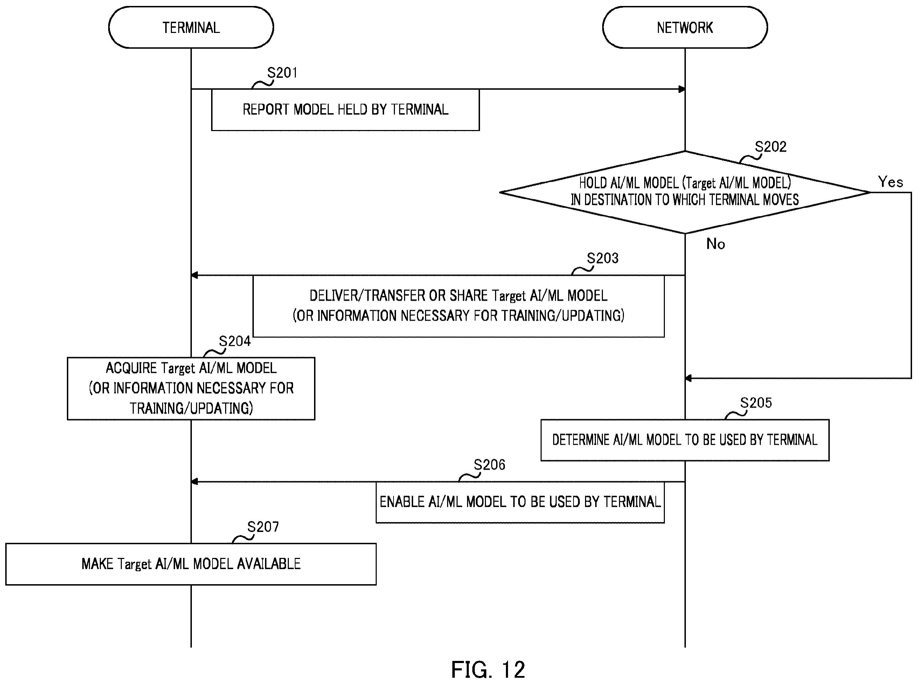

FIG. 12 illustrates exemplary operations of terminal 200 and the network (for example, base station 100) according to the present embodiment. In FIG. 12, as an example, exemplary operations related to an AI/ML model that is deployed for each cell will be described, but the present disclosure is not limited thereto, and an AI/ML model may correspond to a TRP, a site, a beam, or a location.

In FIG. 12, terminal 200 reports information on an AI/ML model held by terminal 200 to the network (S201).

The network determines, for example, based on the information reported by terminal 200, whether terminal 200 holds an AI/ML model (target AI/ML model) that corresponds to a cell (target cell) to which terminal 200 moves (S202).

In a case where terminal 200 does not hold the target AI/ML model (S202: No), the network delivers/transfer or shares a target AI/ML model (or information that is used for training or updating a target AI/ML model) to or with terminal 200 (S203). Terminal 200 acquires the target AI/ML model (or information that is used for training or updating the target AI/ML model) indicated by the network (S204). Note that, in a case where terminal 200 holds the target AI/ML model (S202: Yes), the network may not perform the processing of S203.

The network determines the AI/ML model (for example, the target AI/ML model) to be used by terminal 200 (S205).

The network enables the AI/ML model, which is to be used by terminal 200, for terminal 200 (S206).

Terminal 200 makes the AI/ML model, which is enabled by the network, available (S207).

As described above, the network (for example, base station 100) receives information on an AI/ML model held by terminal 200, where the AI/ML model held by terminal 200 is an AI/ML model for a radio interface, and determines whether to indicate (for example, deliver/transfer or share) a configuration on an AI/ML model (for example, a target AI/ML model) to terminal 200 based on the received information.

Thus, for example, the network does not deliver/transfer or share information on a target AI/ML model in a case where the delivery/transfer or sharing of the information on the target AI/ML model to or with terminal 200 is not necessary. In this way, it is possible to suppress unnecessary delivery/transfer or sharing of a new AI/ML model (or information that is used for training and updating a new AI/ML model) to or with terminal 200 at the time of model updating or switching for terminal 200. For this reason, it is possible to reduce an overhead and a latency for updating or switching an AI/ML model on the terminal side. Thus, according to the present embodiment, it is possible to improve the efficiency of radio communication.

In addition, according to the present embodiment, the network may not indicate mapping information to terminal 200 as in Embodiments 1 and 2. Thus, an overhead of the downlink can be reduced. In addition, in the present embodiment, for example, the AI/ML model to be used by terminal 200 according to a particular cell, a particular TRP, a particular site, a particular beam, or a particular location may not be disclosed by mapping information or the like, which is advantageous from the viewpoint of network deployment.

The embodiments according to non-limiting exemplary embodiments of the present disclosure have been described above.

Note that, for example, Embodiment 1 or 2 and Embodiment 3 may be combined. For example, in some cases, the delivery/transfer or sharing of information on a target AI/ML model to or with terminal 200 may be determined by a request of terminal 200 as in Embodiment 1 or 2, and in other cases, the delivery/transfer or sharing of information on a target AI/ML model to or with terminal 200 may be determined by an instruction of the network (for example, base station 100) as in Embodiment 3.

### [Regarding Architecture]

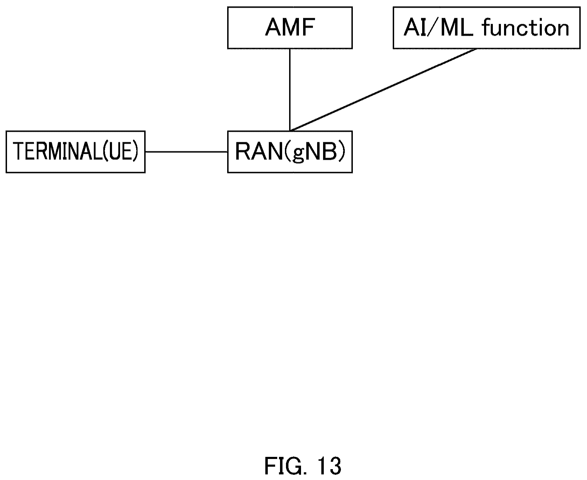

FIG. 13 illustrates an example of an architecture including a function of processing AI/ML. Note that, a part of the network architecture may have a configuration illustrated in FIG. 13. In addition, the function of processing AI/ML may be included in AMF or RAN (gNB).

### [Configuration of Base Station]

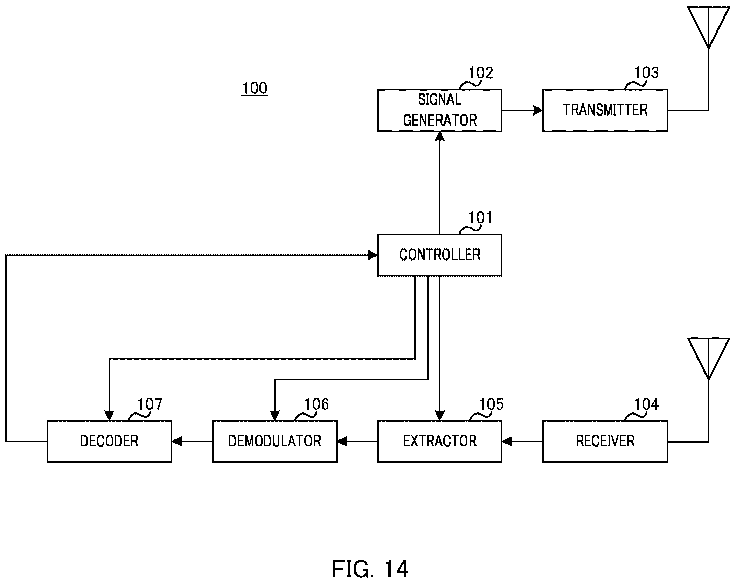

FIG. 14 is a block diagram illustrating an example of a configuration of base station 100. In FIG. 14, base station 100 includes controller 101, signal generator 102, transmitter 103, receiver 104, extractor 105, demodulator 106, and decoder 107.

Note that, at least one of controller 101, signal generator 102, extractor 105, demodulator 106, and decoder 107 illustrated in FIG. 14 may be included in the controller illustrated in FIG. 5. In addition, receiver 104 illustrated in FIG. 14 may be included in the receiver illustrated in FIG. 5.

Controller 101 determines, for example, control information on an AI/ML model of terminal 200, and outputs the determined information to signal generator 102. In addition, controller 101 may output the control information on the AI/ML model of terminal 200 to signal generator 102 in the case of the reception from the function of processing AI/ML (for example, in the case of the input from decoder 107).

In addition, controller 101 determines, for example, information for terminal 200 to receive a downlink signal, and outputs the determined information to signal generator 102. The information for terminal 200 to receive a downlink signal may include, for example, information on resource allocation of a downlink data channel (for example, a Physical Downlink Shared Channel (PDSCH)) or a downlink control channel (for example, a Physical Downlink Control Channel (PDCCH)), and information on a coding and modulation scheme (for example, a Modulation and Coding Scheme (MCS)).

In addition, controller 101 determines, for example, information for terminal 200 to transmit an uplink signal, and outputs the determined information to signal generator 102, extractor 105, demodulator 106, and decoder 107. The information for terminal 200 to transmit an uplink signal may include, for example, information on resource allocation of an uplink data channel (for example, a Physical Uplink Shared Channel (PUSCH)) or an uplink control channel (for example, a Physical Uplink Control Channel (PUCCH)), information on a coding and modulation scheme (for example, MCS), and information on a CSI report.

Signal generator 102 generates, for example, a data signal or a control signal bit sequence by using the information inputted from controller 101, and applies encoding as necessary. In addition, signal generator 102 modulates the encoded bit sequence to generate a modulated signal (for example, a symbol sequence), and maps the modulated signal to a radio resource instructed by controller 101. Signal generator 102 outputs a signal, to which the signal is mapped, to transmitter 103.

Transmitter 103 performs, for example, transmission waveform generation processing such as OFDM on the signal inputted from signal generator 102. Further, in the case of OFDM transmission in which, for example, a cyclic prefix (CP) is added, transmitter 103 performs Inverse Fast Fourier Transform (IFFT) processing on the signal and adds a CP to the signal after the IFFT. Further, for example, transmitter 103 performs RF processing such as D/A conversion or up-conversion on the signal, and transmits a radio signal to terminal 200 via the antenna.

Receiver 104 performs RF processing such as down-conversion or A/D conversion on an uplink signal received from terminal 200 via the antenna, for example. Further, in the case of OFDM transmission, receiver 104 performs, for example, Fast Fourier Transform (FFT) processing on the received signal and outputs the obtained frequency domain signal to extractor 105.

Extractor 105 extracts, for example, a radio resource portion, in which an uplink signal (for example, PUSCH or PUCCH) has been transmitted, from the received signal inputted from receiver 104 based on the information inputted from controller 101, and outputs the extracted radio resource portion to demodulator 106.

Demodulator 106 demodulates, for example, the uplink signal (for example, PUSCH or PUCCH) inputted from extractor 105 based on the information inputted from controller 101. Demodulator 106 outputs, for example, the demodulation result to decoder 107.

Decoder 107 performs, for example, error correction decoding of the uplink signal (for example, PUSCH or PUCCH) based on the information inputted from controller 101 and the demodulation result inputted from demodulator 106 to obtain a decoded reception bit sequence. In a case where the decoded reception bit sequence includes, for example, the control information on the AI/ML model of terminal 200, decoder 107 outputs the information on the AI/ML model to controller 101.

### [Configuration of Terminal]

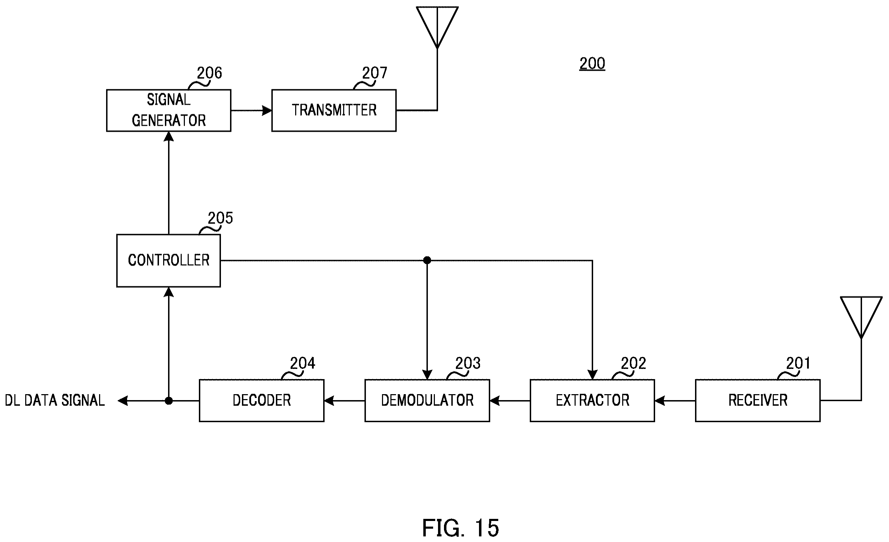

FIG. 15 is a block diagram illustrating an example of a configuration of terminal 200 according to one exemplary embodiment of the present disclosure. For example, in FIG. 15, terminal 200 includes receiver 201, extractor 202, demodulator 203, decoder 204, controller 205, signal generator 206, and transmitter 207.

At least one of extractor 202, demodulator 203, decoder 204, controller 205, and signal generator 206 illustrated in FIG. 15 may be included in the controller illustrated in FIG. 6. In addition, transmitter 207 illustrated in FIG. 15 may be included in the transmitter illustrated in FIG. 6.

Receiver 201 receives, for example, a downlink signal (for example, a downlink data signal or a downlink control signal) from base station 100 via the antenna, and performs RF processing such as down-conversion or A/D conversion on the received radio signal, and obtains a received signal (baseband signal). Further, in a case where receiver 201 receives an OFDM signal, receiver 201 performs FFT processing on the received signal and converts the received signal into that in the frequency domain. Receiver 201 outputs the received signal to extractor 202.

Extractor 202 extracts, for example, a radio resource portion, in which a downlink control signal can be included, from the received signal inputted from receiver 201 based on information on a radio resource of the downlink control signal inputted from controller 205, and outputs the extracted radio resource portion to demodulator 203. Further, extractor 202 extracts a radio resource portion, in which a downlink data signal is included, based on information on a radio resource of the data signal inputted from controller 205, and outputs the extracted radio resource portion to demodulator 203.

Demodulator 203 demodulates, for example, a signal (for example, PDCCH or PDSCH) inputted from extractor 202 based on information inputted from controller 205, and outputs the demodulation result to decoder 204.

Decoder 204 performs, for example, error correction decoding of the PDCCH or PDSCH by using the demodulation result inputted from demodulator 203 to obtain, for example, a control signal or a downlink data signal. Decoder 204 outputs the control signal to controller 205.

Controller 205 specifies, for example, information on downlink transmission based on information obtained from the control signal inputted from decoder 204, and outputs the specified information to extractor 202 and demodulator 203. In addition, controller 205 specifies, for example, information on uplink transmission based on information obtained from the control signal inputted from decoder 204, and outputs the specified information to signal generator 206. In addition, controller 205 generates control information on a terminal AI/ML model by the above-described method, and outputs the generated control information to signal generator 206.

Signal generator 206 generates an uplink data signal or an uplink control signal based on the control information on the terminal AI/ML model and the information on the uplink transmission, which are inputted from controller 205, and encodes and modulates a bit sequence of the generated signal to map the encoded and modulated signal to a radio resource. Note that, the control information on the terminal AI/ML model may be included in a user plane message or may be included in a control plane message, for example. Signal generator 206 outputs, for example, an uplink signal, to which the signal is mapped, to transmitter 207.

Transmitter 207 performs, for example, transmission signal waveform generation such as OFDM on the signal inputted from signal generator 206. In addition, for example, in the case of OFDM transmission or DFT-s-OFDM transmission using a CP, transmitter 207 performs IFFT processing on the signal, and adds a CP to the signal after the IFFT. Alternatively, in a case where transmitter 207 generates a single carrier waveform such as a DFT-s-OFDM waveform, for example, a DFT unit may be added at the previous stage of signal generator 206 (not illustrated). Further, for example, transmitter 207 performs RF processing such as D/A conversion and up-conversion on a transmission signal, and transmits a radio signal to base station 100 via the antenna.

### (Other Embodiments)

Note that, use cases to which the above-described embodiments are applied are not limited to the CSI compression, and the above-described embodiments can be applied to any use case in which an AI/ML model is deployed on the terminal side. For example, examples of use cases in which an AI/ML model is deployed on the terminal side include CSI prediction using an AI/ML model on the terminal side, Beam prediction in the spatial domain or the time domain by using an AI/ML model on the terminal side, and positioning accuracy enhancement using an AI/ML model on the terminal side.

In addition, AI/ML models are not limited to cases where mapping to a cell, a site, a TRP, a beam, or a location is performed, and, for example, different AI/ML models may also be used depending on other particular parameters such as a movement speed of the terminal, a radio channel such as multipath, the cell congestion situation, and the traffic to be transmitted. For example, in Embodiment 1 or 2, a relationship (for example, mapping information) between these particular parameters and information on AI/ML models may be indicated to terminal 200. In addition, in Embodiment 3, a relationship (for example, UE capability) between these particular parameters and information on AI/ML models may be indicated to the network.

In addition, the "Mobility" used in the above-described embodiments may include handover in the RRC CONNECTED mode and reselection in the RRC IDLE or RRC INACTIVE mode. In addition, the "Mobility" may include the movement between TRPs, beam switching, the movement of the location, and the like.

In addition, in the present disclosure, the signal/message/signaling used for indication may be indicated in a control plane message (for example, UCI or MAC-CE), may be indicated in an RRC signal, or may be indication in DCI that is signaling of a physical layer.

### (Complements)

Information indicative of whether terminal 200 supports the functions, operations, or pieces of processing that have been described in the above-mentioned embodiments and complements may be transmitted (or indicated) from terminal 200 to base station 100, as capability information or a capability parameter for terminal 200, for example.

The capability information may include information elements (IEs) that individually indicate whether terminal 200 supports at least one of the functions, operations, or pieces of processing that have been described in the above-mentioned embodiments, variations, and complements. Alternatively, the capability information may include information elements that indicate whether terminal 200 supports a combination of any two or more of the functions, operations, or pieces of processing that have been described in the above-mentioned embodiments, variations, and complements.

Base station 100 may determine (or decide or assume), for example, based on the capability information received from terminal 200, the functions, operations, or pieces of processing that are supported (or not supported) by terminal 200, which is a transmission source of the capability information. Base station 100 may execute operations, pieces of processing, or control according to a determination result based on the capability information. For example, base station 100 may control processing related to an AI/ML model based on the capability information received from terminal 200.

Note that, the fact that terminal 200 does not support some of the functions, operations, or pieces of processing described in the above-described embodiments, variations, and complements may be read as that some of the functions, operations, or pieces of processing are limited at terminal 200. For example, information or a request relating to such limitation may be indicated to base station 100.

The information on the capability or the limitation of terminal 200 may be defined by standards or may be implicitly indicated to base station 100 in association with information known in base station 100 or information to be transmitted to base station 100, for example.

The embodiments, the variations, and the complements according to a non-limiting and exemplary embodiment of the present disclosure have been described above.

### (Control Signals)

In the present disclosure, the downlink control signal (information) related to the present disclosure may be a signal (information) transmitted through PDCCH of the physical layer or a signal (information), or may be a signal transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### (Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in sidelink communication, a terminal may be adopted instead of a base station. The base station may be a relay apparatus that relays communication between a higher node and a terminal. The base station may be a roadside unit as well.

### (Uplink/Downlink/Sidelink)

The present disclosure may be applied to any of uplink, downlink, and sidelink. The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### (Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### (Reference Signals)

In the present disclosure, the reference signals are signals known to both a base station and a terminal and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### (Time Intervals)

In the present disclosure, time resource units are not limited to one or a combination of slots and symbols, and may be time resource units, such as frames, superframes, subframes, slots, time slots, subslots, minislots, or time resource units, such as symbols, Orthogonal Frequency Division Multiplexing (OFDM) symbols, Single Carrier-Frequency Division Multiple Access (SC-FDMA) symbols, or other time resource units. The number of symbols included in one slot is not limited to any number of symbols exemplified in the embodiment(s) described above, and may be other numbers of symbols.

### (Frequency Bands)

The present disclosure may be applied to any of a licensed band or an unlicensed band.

### (Communication)

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### (Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### <5G NR System Architecture and Protocol Stack>

3GPP has been working on the next release for the 5th generation cellular technology (simply called "5G"), including the development of a new radio access technology (NR) operating in frequencies ranging up to 100 GHz. The first version of the 5G standard was completed at the end of 2017, which allows proceeding to 5G NR standard-compliant trials and commercial deployments of terminals (e.g., smartphones).

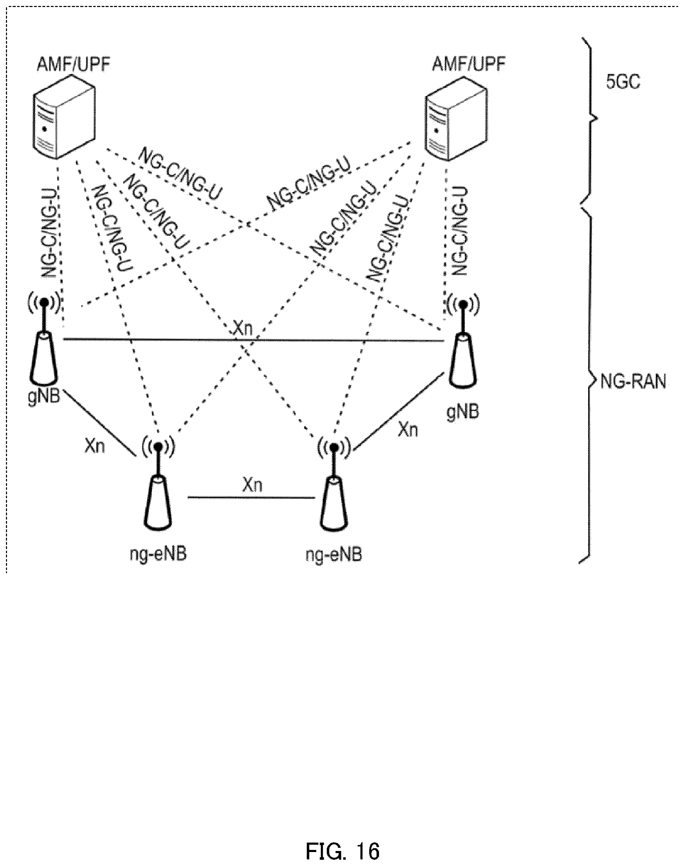

For example, the overall system architecture assumes an NG-RAN (Next Generation-Radio Access Network) that includes gNBs. The gNB provides the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g., a particular core entity performing the AMF) by means of the NG-C interface and to the UPF (User Plane Function) (e.g., a particular core entity performing the UPF) by means of the NG-U interface. The NG-RAN architecture is illustrated in FIG. 16 (see e.g., 3GPP TS 38.300 v15.6.0, section 4).

The user plane protocol stack for NR (see e.g., 3GPP TS 38.300, section 4.4.1) includes the PDCP (Packet Data Convergence Protocol (see clause 6.4 of TS 38.300)), RLC (Radio Link Control (see clause 6.3 of TS 38.300)) and MAC (Medium Access Control (see clause 6.2 of TS 38.300)) sublayers, which are terminated in the gNB on the network side. Additionally, a new Access Stratum (AS) sublayer (SDAP: Service Data Adaptation Protocol) is introduced above the PDCP (see e.g., clause 6.5 of 3GPP TS 38.300). A control plane protocol stack is also defined for NR (see for instance TS 38.300, section 4.4.2). An overview of the Layer 2 functions is given in clause 6 of TS 38.300. The functions of the PDCP, RLC, and MAC sublayers are listed respectively in clauses 6.4, 6.3, and 6.2 of TS 38.300. The functions of the RRC layer are listed in clause 7 of TS 38.300.

For instance, the Medium Access Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. The physical layer also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. Examples of the physical channel include a Physical Random Access Channel (PRACH), a Physical Uplink Shared Channel (PUSCH), and a Physical Uplink Control Channel (PUCCH) as uplink physical channels, and a Physical Downlink Shared Channel (PDSCH), a Physical Downlink Control Channel (PDCCH), and a Physical Broadcast Channel (PBCH) as downlink physical channels.

Use cases/deployment scenarios for NR could include enhanced mobile broadband (eMBB), ultra-reliable low-latency communications (URLLC), and massive machine type communication (mMTC), which have diverse requirements in terms of data rates, latency, and coverage. For example, eMBB is expected to support peak data rates (20 Gbps for downlink and 10 Gbps for uplink) and user-experienced data rates on the order of three times what is offered by IMT-Advanced. On the other hand, in case of URLLC, the tighter requirements are put on ultra-low latency (0.5 ms for UL and DL each for user plane latency) and high reliability (1-10⁻⁵ within 1 ms). Finally, the mMTC may preferably require high connection density (1,000,000 devices/km² in an urban environment), large coverage in harsh environments, and extremely long-life battery for low cost devices (15 years).

Therefore, the OFDM numerology (e.g., subcarrier spacing, OFDM symbol duration, cyclic prefix (CP) duration, and number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacings of 15 kHz, 30 kHz, and 60 kHz... are being considered at the moment. The symbol duration Tu and the subcarrier spacing Δf are directly related through the formula Δf = 1/Tu. In a similar manner as in LTE systems, the term "resource element" can be used to denote a minimum resource unit being composed of one subcarrier for the length of one OFDM/SC-FDMA symbol.

In the new radio system 5G-NR for each numerology and each carrier, resource grids of subcarriers and OFDM symbols are defined respectively for uplink and downlink. Each element in the resource grids is called a resource element and is identified based on the frequency index in the frequency domain and the symbol position in the time domain (see 3GPP TS 38.211 v15.6.0).

### <Functional Split between NG-RAN and 5GC in 5G NR>

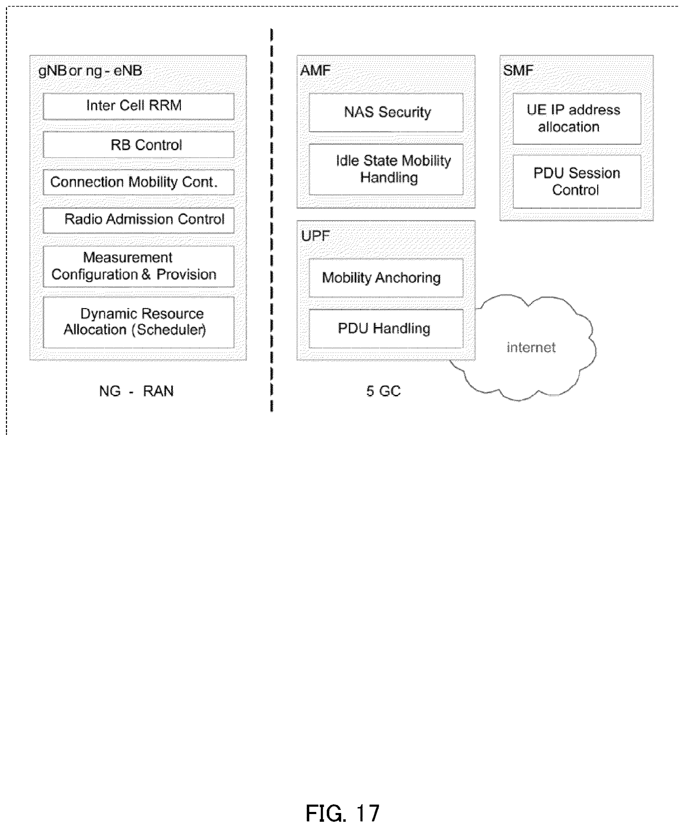

FIG. 17 illustrates the functional split between the NG-RAN and the 5GC. A logical node of the NG-RAN is gNB or ng-eNB. The 5GC includes logical nodes AMF, UPF, and SMF.

For example, gNB and ng-eNB hosts the following main functions:
- Radio Resource Management functions such as Radio Bearer Control, Radio Admission Control, Connection Mobility Control, and dynamic allocation (scheduling) of both uplink and downlink resources to a UE;
- IP header compression, encryption, and integrity protection of data;
- Selection of an AMF during UE attachment in such a case when no routing to an AMF can be determined from the information provided by the UE;
- Routing user plane data towards the UPF;
- Routing control plane information towards the AMF;
- Connection setup and release;
- Scheduling and transmission of paging messages;
- Scheduling and transmission of system broadcast information (originated from the AMF or Operation, Admission, Maintenance (OAM));
- Measurement and measurement reporting configuration for mobility and scheduling;
- Transport level packet marking in the uplink;
- Session management;
- Support of network slicing;
- QoS flow management and mapping to data radio bearers;
- Support of UEs in the RRC_INACTIVE state;
- Distribution function for NAS messages;
- Radio access network sharing;
- Dual connectivity; and
- Tight interworking between NR and E-UTRA.

The Access and Mobility Management Function (AMF) hosts the following main functions:
- Function of Non-Access Stratum (NAS) signaling termination;
- NAS signaling security;
- Access Stratum (AS) security control;
- Inter-Core Network (CN) node signaling for mobility between 3GPP access networks;
- Idle mode UE reachability (including control and execution of paging retransmission);
- Registration area management;
- Support of intra-system and inter-system mobility;
- Access authentication;
- Access authorization including check of roaming rights;
- Mobility management control (subscription and policies);
- Support of network slicing;
- Session Management Function (SMF) selection.

In addition, the User Plane Function (UPF) hosts the following main functions:
- Anchor Point for intra-/inter-RAT mobility (when applicable);
- External Protocol Data Unit (PDU) session point for interconnection to a data network;
- Packet routing and forwarding;
- Packet inspection and a user plane part of Policy rule enforcement;
- Traffic usage reporting;
- Uplink classifier to support routing traffic flows to a data network;
- Branching point to support multi-homed PDU session;
- QoS handling for user plane (e.g., packet filtering, gating, UL/DL rate enforcement);
- Uplink traffic verification (SDF to QoS flow mapping); and
- Function of downlink packet buffering and downlink data notification triggering.

Finally, the Session Management Function (SMF) hosts the following main functions:
- Session management;
- UE IP address allocation and management;
- Selection and control of UPF;
- Configuration function for traffic steering at the User Plane Function (UPF) to route traffic to a proper destination;
- Control part of policy enforcement and QoS; and
- Downlink data notification.

### <RRC Connection Setup and Reconfiguration Procedure>

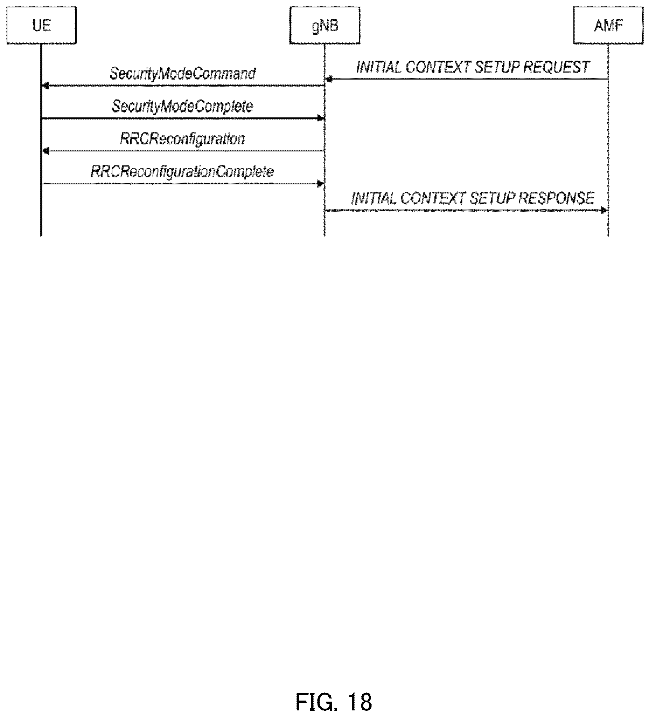

FIG. 18 illustrates some interactions between a UE, gNB, and AMF (a 5GC Entity) performed in the context of a transition of the UE from RRC_IDLE to RRC_CONNECTED for the NAS part (see TS 38 300 v15.6.0).

The RRC is higher layer signaling (protocol) used to configure the UE and gNB. With this transition, the AMF prepares UE context data (which includes, for example, a PDU session context, security key, UE Radio Capability, UE Security Capabilities, and the like) and sends it to the gNB with an INITIAL CONTEXT SETUP REQUEST. Then, the gNB activates the AS security with the UE. This activation is performed by the gNB transmitting to the UE a SecurityModeCommand message and by the UE responding to the gNB with the SecurityModeComplete message. Afterwards, the gNB performs the reconfiguration to setup the Signaling Radio Bearer 2 (SRB2) and Data Radio Bearer(s) (DRB(s)) by means of transmitting to the UE the RRCReconfiguration message and, in response, receiving by the gNB the RRCReconfigurationComplete from the UE. For a signaling-only connection, the steps relating to the RRCReconfiguration are skipped since SRB2 and DRBs are not set up. Finally, the gNB indicates the AMF that the setup procedure is completed with INITIAL

### CONTEXT SETUP RESPONSE.

Thus, the present disclosure provides a 5th Generation Core (5GC) entity (e.g., AMF, SMF, or the like) including control circuitry, which, in operation, establishes a Next Generation (NG) connection with a gNodeB, and a transmitter, which in operation, transmits an initial context setup message to the gNodeB via the NG connection such that a signaling radio bearer between the gNodeB and a User Equipment (UE) is set up. Specifically, the gNodeB transmits Radio Resource Control (RRC) signaling including a resource allocation configuration Information Element (IE) to the UE via the signaling radio bearer. Then, the UE performs an uplink transmission or a downlink reception based on the resource allocation configuration.

### <Usage Scenarios of IMT for 2020 and beyond>

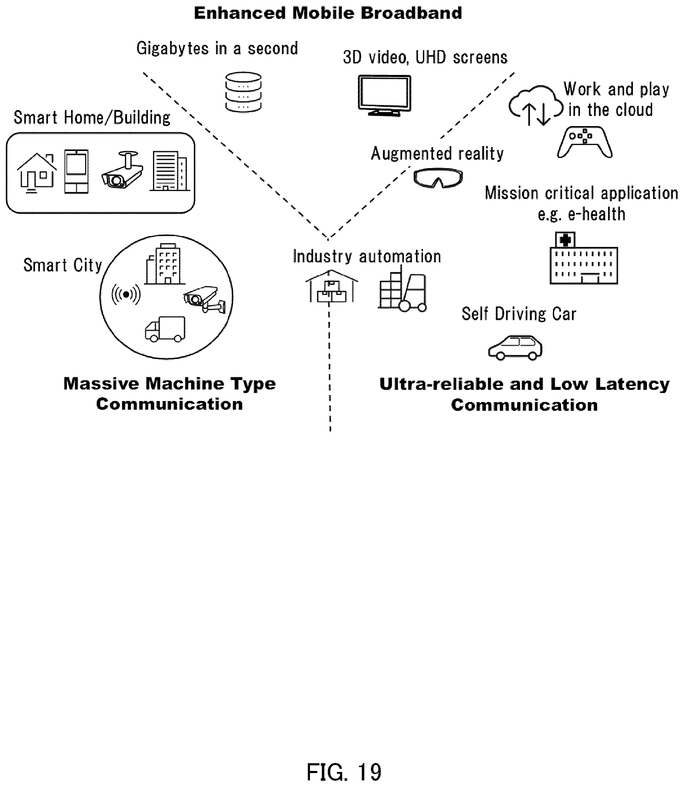

FIG. 19 illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications (mMTC). FIG. 19 illustrates some examples of envisioned usage scenarios for IMT for 2020 and beyond (see e.g., ITU-R M.2083 FIG. 2).

The URLLC use case has stringent requirements for capabilities such as throughput, latency and availability. The URLLC use case has been envisioned as one of element techniques to enable future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a block error rate (BLER) of 1E-5 for a packet size of 32 bytes with a user plane latency of 1 ms.

From the physical layer perspective, reliability can be improved in a number of possible ways. The current scope for improving the reliability involves defining separate CQI tables for URLLC, more compact DCI formats, repetition of PDCCH, or the like. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency/higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for the URLLC and mMTC for example, is high reliability or ultra-reliability. Several mechanisms can improve the reliability from radio perspective and network perspective. In general, there are a few key potential areas that can help improve the reliability. These areas include compact control channel information, data/control channel repetition, and diversity with respect to the frequency, time, and/or spatial domain. These areas are applicable to reliability improvement in general, regardless of particular communication scenarios.

For NR URLLC, further use cases with tighter requirements have been envisioned such as factory automation, transport industry and electrical power distribution. The tighter requirements are higher reliability (up to 10⁻⁶ level), higher availability, packet size of up to 256 bytes, time synchronization down to the order of a few µs where the value can be one or a few µs depending on frequency range and short latency in the order of 0.5 to 1 ms (e.g., target user plane latency of 0.5 ms) depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements are possible. The term "mini-slot" refers to a Transmission Time Interval (TTI) including a smaller number of symbols than a slot (a slot comprising fourteen symbols).

### <QoS Control>

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU sessions. For each UE, the NG-RAN establishes at least one Data Radio Bearer (DRB) together with the PDU session, e.g., as illustrated above with reference to FIG. 18. Further, additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

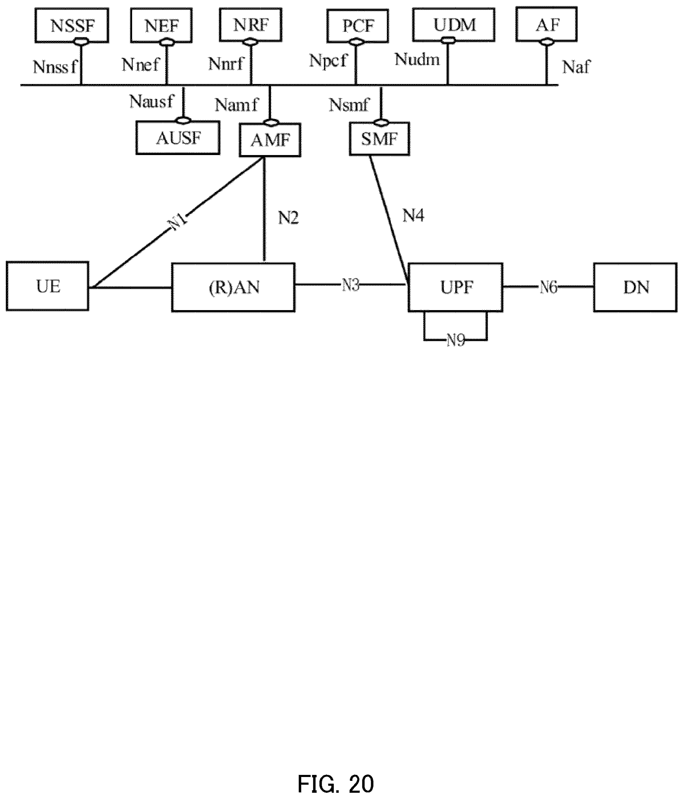

FIG. 20 illustrates a 5G NR non-roaming reference architecture (see TS 23.501 v16.1.0, section 4.23). An Application Function (AF) (e.g., an external application server hosting 5G services, exemplarily described in FIG. 19) interacts with the 3GPP Core Network in order to provide services, for example to support application influencing on traffic routing, accessing Network Exposure Function (NEF) or interacting with the policy framework for policy control (e.g., QoS control) (see Policy Control Function, PCF). Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

FIG. 20 illustrates further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN, e.g., operator services, Internet access, or third party services). All of or a part of the core network functions and the application services may be deployed and running on cloud computing environments.

In the present disclosure, thus, an application server (e.g., AF of the 5G architecture), is provided that includes: a transmitter, which in operation, transmits a request containing a QoS requirement for at least one of URLLC, eMMB and mMTC services to at least one of functions (such as NEF, AMF, SMF, PCF, and UPF) of the 5GC to establish a PDU session including a radio bearer between a gNodeB and a UE in accordance with the QoS requirement; and control circuitry, which, in operation, performs the services using the established PDU session.

The notation "processor", "part", "...er", "...or" or "...ar" used in the present disclosure may be interchangeably replaced with another notation such as "... circuitry", "... device", "... unit", or "... module".

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI herein may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a Field Programmable Gate Array (FPGA) that can be programmed after the manufacture of the LSI or a reconfigurable processor in which the connections and the configurations of circuit cells arranged inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module and one or more antennas. The RF module may include an amplifier, an RF modulator/demodulator, or the like. Some non-limiting examples of such a communication apparatus include a phone (e.g., cellular (cell) phone, smartphone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as, e.g., a base station, an access point, and any other apparatus, device or system that communicates with or controls apparatuses such as those in the above non-limiting examples.

A base station according to one exemplary embodiment of the present disclosure includes: control circuitry, which, in operation, determines whether to indicate a configuration on an artificial intelligence model on a side of a terminal, where the artificial intelligence model on the side of the terminal is an artificial intelligence model for a radio interface, to the terminal based on presence or absence of a request from the terminal; and transmission circuitry, which, in operation, transmits a signal related to the configuration in a case where it has been determined that the configuration is indicated.

In one exemplary embodiment of the present disclosure, the transmission circuitry transmits information on mapping between a radio environment and an artificial intelligence model corresponding to the radio environment.

In one exemplary embodiment of the present disclosure, the radio environment relates to at least one of a cell, a site, a Transmission and Reception Point (TRP), a beam, and/or a location.

In one exemplary embodiment of the present disclosure, the transmission circuitry transmits information on mapping between a radio environment, an artificial intelligence model corresponding to the radio environment, and a version of the artificial intelligence model.

In one exemplary embodiment of the present disclosure, the radio environment relates to at least one of a cell, a site, a Transmission and Reception Point (TRP), a beam, and/or a location.

A base station according to one exemplary embodiment of the present disclosure includes: control circuitry, which, in operation, determines whether to indicate a configuration on an artificial intelligence model on a side of a terminal to the terminal based on information on an artificial intelligence model held by the terminal, where the artificial intelligence model held by the terminal is an artificial intelligence model for a radio interface; and transmission circuitry, which, in operation, transmits a signal related to the configuration in a case where it has been determined that the configuration is indicated.

A terminal according to one exemplary embodiment of the present disclosure includes: control circuitry, which, in operation, determines whether to request a network to indicate a configuration on an artificial intelligence model on a side of the terminal based on information on an artificial intelligence model held by the terminal, where the artificial intelligence model held by the terminal is an artificial intelligence model for a radio interface; and reception circuitry, which, in operation, receives a signal related to the configuration in a case where it has been requested that the configuration be indicated.

A terminal according to one exemplary embodiment of the present disclosure includes: transmission circuitry, which, in operation, transmits information on an artificial intelligence model held by the terminal, where the artificial intelligence model held by the terminal is an artificial intelligence model for a radio interface; and reception circuitry, which, in operation, receives a signal related to a configuration on an artificial intelligence model on a side of the terminal in a case where it has been determined based on the information that the configuration is indicated.

A communication method according to one exemplary embodiment of the present disclosure includes: determining, by a base station, whether to indicate a configuration on an artificial intelligence model on a side of a terminal to the terminal based on presence or absence of a request from the terminal, where the artificial intelligence model on the side of the terminal is an artificial intelligence model for a radio interface; and transmitting, by the base station, a signal related to the configuration in a case where it has been determined that the configuration is indicated.

A communication method according to one exemplary embodiment of the present disclosure includes: determining, by a base station, whether to indicate a configuration on an artificial intelligence model on a side of a terminal to the terminal based on information on an artificial intelligence model held by the terminal, where the artificial intelligence model held by the terminal is an artificial intelligence model for a radio interface; and transmitting, by the base station, a signal related to the configuration in a case where it has been determined that the configuration is indicated.

A communication method according to one exemplary embodiment of the present disclosure includes: determining, by a terminal, whether to request a network to indicate a configuration on an artificial intelligence model on a side of the terminal based on information on an artificial intelligence model held by the terminal, where the artificial intelligence model held by the terminal is an artificial intelligence model for a radio interface; and receiving, by the terminal, a signal related to the configuration in a case where it has been requested that the configuration be indicated.

A communication method according to one exemplary embodiment of the present disclosure includes: transmitting, by a terminal, information on an artificial intelligence model held by the terminal, where the artificial intelligence model held by the terminal is an artificial intelligence model for a radio interface; and receiving, by the terminal, a signal related to a configuration on an artificial intelligence model on a side of the terminal in a case where it has been determined based on the information that the configuration is indicated.

The disclosure of Japanese Patent Application No. 2023-026228, filed on February 22, 2023, including the specification, drawings and abstract, is incorporated herein by reference in its entirety.

### Industrial Applicability

An exemplary embodiment of the present disclosure is useful for radio communication systems.

### Reference Signs List

100 Base station
101, 205 Controller
102, 206: Signal generator
103, 207 Transmitter
104, 201 Receiver
105, 202 Extractor
106, 203 Demodulator
107, 204 Decoder
200 Terminal

## Claims

1. A base station, comprising:
control circuitry, which, in operation, determines whether to indicate a configuration on an artificial intelligence model on a side of a terminal to the terminal based on presence or absence of a request from the terminal, the artificial intelligence model on the side of the terminal being an artificial intelligence model for a radio interface; and
transmission circuitry, which, in operation, transmits a signal related to the configuration in a case where it has been determined that the configuration is indicated.

2. The base station according to claim 1, wherein
the transmission circuitry transmits information on mapping between a radio environment and an artificial intelligence model corresponding to the radio environment.

3. The base station according to claim 2, wherein
the radio environment relates to at least one of a cell, a site, a Transmission and Reception Point (TRP), a beam, and/or a location.

4. The base station according to claim 1, wherein
the transmission circuitry transmits information on mapping between a radio environment, an artificial intelligence model corresponding to the radio environment, and a version of the artificial intelligence model.

5. The base station according to claim 4, wherein
the radio environment relates to at least one of a cell, a site, a Transmission and Reception Point (TRP), a beam, and/or a location.

6. A terminal, comprising:
control circuitry, which, in operation, determines whether to request a network to indicate a configuration on an artificial intelligence model on a side of the terminal based on information on an artificial intelligence model held by the terminal, the artificial intelligence model held by the terminal being an artificial intelligence model for a radio interface; and
reception circuitry, which, in operation, receives a signal related to the configuration in a case where it has been requested that the configuration be indicated.

7. A communication method, comprising:
determining, by a base station, whether to indicate a configuration on an artificial intelligence model on a side of a terminal to the terminal based on presence or absence of a request from the terminal, the artificial intelligence model on the side of the terminal being an artificial intelligence model for a radio interface; and
transmitting, by the base station, a signal related to the configuration in a case where it has been determined that the configuration is indicated.

8. A communication method, comprising:
determining, by a terminal, whether to request a network to indicate a configuration on an artificial intelligence model on a side of the terminal based on information on an artificial intelligence model held by the terminal, the artificial intelligence model held by the terminal being an artificial intelligence model for a radio interface; and
receiving, by the terminal, a signal related to the configuration in a case where it has been requested that the configuration be indicated.
